# EUROPEAN PATENT SPECIFICATION

(11) **EP 2 481 617 B1**
(45) Date of publication and mention of the grant of the patent: **01.10.2014**
(21) Application number: 11166242.5
(22) Date of filing: 16.05.2011
(51) Int. Cl.: B60H 1/34

(54) **Air outlet for vehicle applications**
Luftauslass für Fahrzeuganwendungen
Sortie d'air pour applications pour véhicules

(30) Priority: 17.11.2010 US 948243
(43) Date of publication of application: 01.08.2012
(73) Proprietor: International Automotive Components Group North America, Inc., Southfield MI 48034 (US)
(72) Inventor: Nicola, Kirk, Beverly Hills, MI 48025 (US); Bosoc, Daniel, West Bloomfield, MI 48323 (US)
(74) Representative: Liesegang, Eva

(56) References cited:
- EP-A2- 2 018 986
- GB-A- 714 591
- JP-A- 2000 343 935

## Description

### FIELD

The present disclosure relates generally to air directing and regulating systems in vehicles and, more particularly, to relatively round air duct outlets having a uniform operating effort by imposing a relatively constant stress on a rotating component of the air outlet, wherein the rotating component may regulate the direction and volume of air flow.

### BACKGROUND

JP 2000343935 A describes as nearest prior art document an air outlet including a ring which is sandwiched between two circular discs, with a spring integrated with the circular discs and arranged in a clearance gap between the discs and the ring. A purpose of this arrangement is to limit rotation of the disc relative to the ring to a particular angular range.

Conventionally, vehicle interiors are provided with one or more air duct outlets which are connected by ducts to an outside air source and/or to a cooling and/or heating system that provides cooled and/or heated air to the vicinity of the occupants. Because it is generally desirable for vehicle occupants to be able to adjust the direction of air flow within a vehicle interior, air duct outlets are typically provided with adjustable louvers. In addition, air duct outlets may be provided with dampers for allowing vehicle occupants to control the amount of air flowing there through.

Such outlets for air flow may be located, for instance, in the headliner, door panels, pillars, console and instrument panel of the vehicles. Such outlets may also be found in trucks, boats, planes and even trains.

Various types and shapes of air duct outlets may be provided depending upon special functions, the ability to direct air to various locations and design (theme) constraints within the vehicle. See, for example, United States Patent Nos. 4,345,510; 4,702,156; and 4,006,673.

Vehicle manufacturers continue to seek components, such as air duct outlets, that have enhanced functionality and durability, yet are cost effective to manufacture. Vehicle manufacturers also continue to seek components, such as air duct outlets, that can enhance styling within a vehicle, yet remain functional and economical. This may include air outlets having curved as opposed to relatively straight feature lines.

Air outlets, such as those used in motor vehicles, may generally be rather complex assemblies of louvers, vanes and related linkages which interact to allow the flow of air to be directed and regulated as desired by the vehicle occupants. Such direction of air may be in a generally horizontal or vertical plane as most outlets, or registers, are rectangular in shape. Accordingly, the adjustment of flow may only be possible along the major planes of the outlet shape. Such complex assemblies may have numerous moving parts and complicate the manufacturing and assembly processes, making the outlets expensive to produce and challenging the management of tolerance stack-up between the many interacting subcomponents. This may in turn result in less than satisfactory mechanical reliability and higher than desired operating efforts due to binding of the linkages.

What is needed is an air outlet that is capable of 360° adjustment so that the air may be directed wherever desired, that is relatively quiet in operation and one that provides minimal resistance to air flow. In addition, there is on-going need for an air-outlet that may be adjusted with a consistent and relatively uniform effort, and one that provides a relatively constant resistance to a manual input adjustment that may involve the rotation of a component of the air outlet device.

### SUMMARY

The present invention provides an air outlet according to claim 1 a trim component according to claim 11 and a method for adjusting the relative position of an air outlet according to claim 12. Embodiments of the invention are defined in the dependent claims.

### BRIEF DESCRIPTION OF THE DRAWINGS

The features, operation and advantages of the invention may be better understood from the following detailed description of the preferred embodiments taken in conjunction with the attached drawings, in which
**FIG. 1** is a perspective view of the air outlet of the present disclosure, partially open;
**FIG. 2** is an exploded perspective view of the back of the air outlet of **FIG. 1**;
**FIG. 3** is a rear view of the bezel of the air outlet of **FIG. 1**; and
**FIG. 4** is a rear view of the assembled air outlet of **FIG. 1**.

### DETAILED DESCRIPTION

Still other objects and advantages of the present invention will become readily apparent to those skilled in the art from the following detailed description, wherein it is shown and described preferred embodiments of the invention. As will be realized the invention is capable of other and different embodiments, and its several details are capable of modification in various respects, without departing from the invention. Accordingly, the description is to be regarded as illustrative in nature and not as restrictive.

The present disclosure is directed at a generally round air outlet for directing and regulating air flow, particularly within vehicles. Air outlets having a generally rounded shape may provide relatively quieter functioning due to less turbulent air flow as the inner surfaces are generally curved and the overall shape of the outlet may more closely resemble the shape of the duct work that feeds air to the outlet. Similarly, air outlets having a generally rounded shape may offer less resistance to air flow as there may be a smaller transition in cross-section from duct to outlet and a relatively simpler mechanism may be required to direct the air flow.

Most air outlets have generally rectangular shapes and such rectangular shapes may produce more air noise and air flow resistance than round or generally circular shaped outlets. In addition, due to the complexity of multiple louvers and multiple sets of vanes and associated linkages, the efforts to adjust the overall direction of the air flow may become somewhat greater than what may be acceptable for advanced performance.

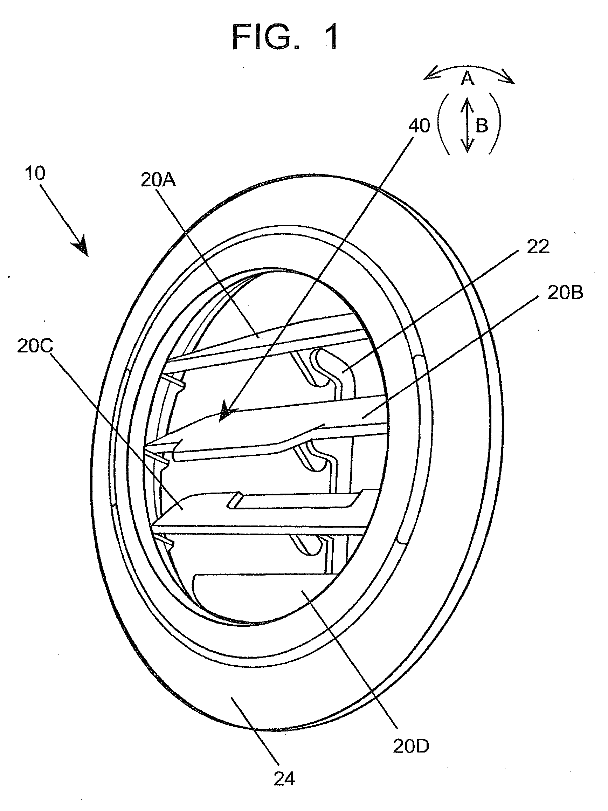

The generally round air outlet of the present disclosure may only require louver adjustment in a single plane, and that plane is rotatable over the full 360° range of the outlet. **FIG. 1** is a perspective view of an exemplary embodiment of the air outlet **10** of the present disclosure if a fully assembled configuration.

In **FIG. 1**, a bezel **24** surrounds a plurality of louvers **20A, 20B, 20C 20D** which are adjustable (shown as partially open) by a flow director **40** which may be integrally molded into one of the louvers **20B**. Moving the flow director **40** in the plane of arrow **B** allows the flow of air to be directionally adjusted and regulated from an open position to a closed position. Linkage **22** may interconnect the louvers, in this case **20A, 20B, 20C 20D** such that they operate in unison.

Additionally, flow director **40** may be rotated (arrow **A**) to allow the flow of air emanating from the outlet **10** to be directed at any angle around the 360° periphery of the outlet **10**. Accordingly, one may rotate the flow director **40** to any desired position and allow the flow director to remain at such position under a different position is desired.

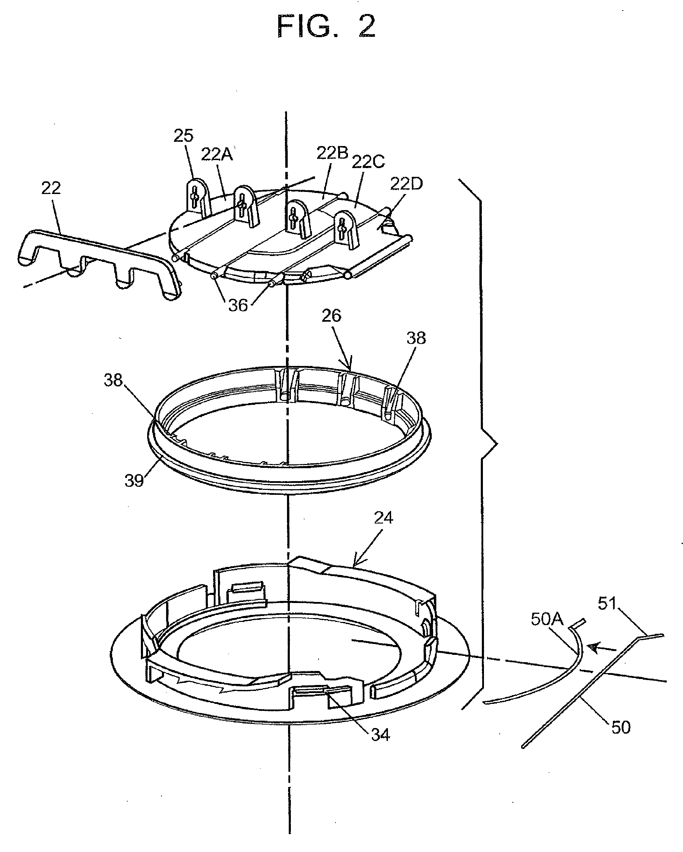

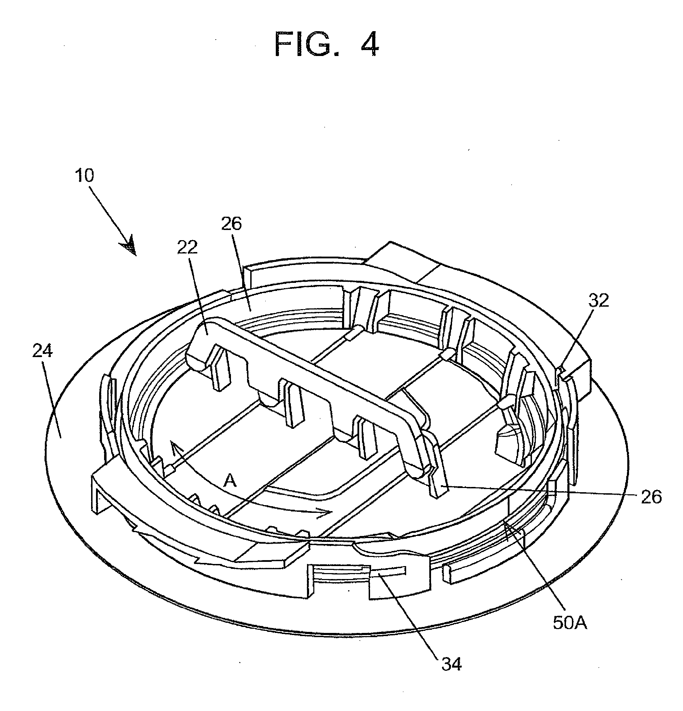

**FIG. 2** is an exploded view of the air outlet **10** from the rear, illustrating the components that interact to form the air outlet. The four louvers **20A, 20B, 20C 20D** may each include an integrally formed hinge pin **36** which the louvers may swivel upon and which locate the louvers to the louver ring **26** (see **FIG. 4**). It is contemplated that more or less than 4 louvers may be utilized. For example, one may utilize 2-10 louvers depending upon the overall size of the air outlet. On the back of each louver there may be a connector **25** which engages the louver linkage **22** to allow the louvers to operate in unison when actuated by the movement of the flow director **40** (not shown). In addition, it may be understood that reference to ring herein may be understood as any enclosed structure that fits within a bezel and which may rotate relative to the bezel.

The plurality of louvers **20A, 20B, 20C 20D** and the linkage **22** may be assembled together and attached to a louver ring **26** preferably by mechanical snap or friction fit. Other means of mechanical attachment may also be utilized. The louver ring **26** may include at its' inner periphery a number of detents **38** which correspond to the hinge pins **36** and position and secure the louver assembly within the louver ring **26**. The detents **38**, as shown, may have an inverted keyhole shape.

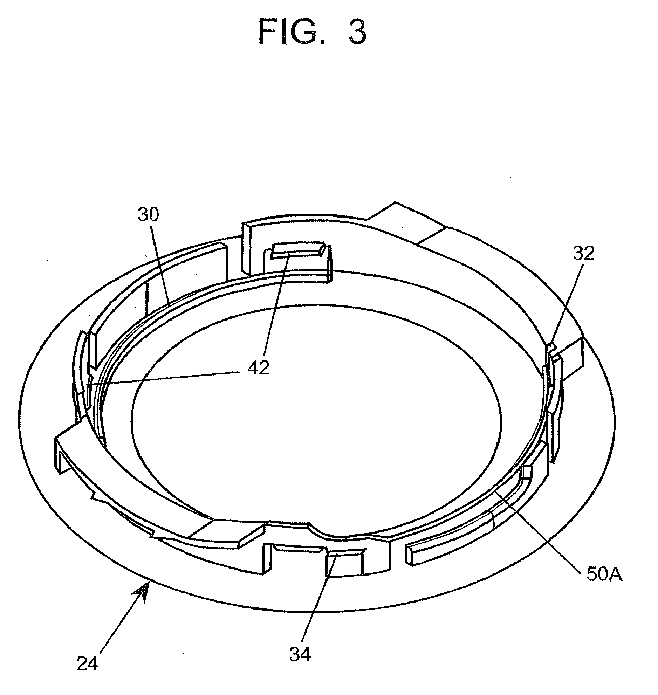

Similarly, once the plurality of louvers, including the linkage, and the louver ring are assembled together, that assembly may be mechanically engaged, by a snap or friction fit, into the rear of the bezel **24** by engaging the outer edge **39** of the louver ring **26** with one or more detent flanges **42** which may reside around the inner periphery of the bezel **24**, as shown in **FIG. 3**.

The various components, louvers, linkages, rings, etc. may be injection molded from a variety of plastics having relatively good dimensional stability, such as polycarbonate (PC), acrylonitrile-styrene-butadiene (ABS), polyamide, polyimide, aramid, liquid crystal polymer, oriented polyethylene, polypropylene, polyphenylene ether polymer and polystyrene as well as blends thereof and glass-filled versions thereof. Plastics herein may therefore be understood as various resins having molecular weights in excess of 10,000 that include identifiable repeating unit structure.

It should be noted that the assembly of molded components herein may present a challenge in adequately controlling the dimensions of each of the components and in managing the tolerance stack-up between mating components so that the efforts required to operate the air outlet are preferably low and uniformly consistent. Such factors as temperature, humidity, moisture content of the plastic resin and tool wear may provide a range of dimensions of the components. Further, variations in the conditions of assembly and in the use within the vehicle may add further dimensional variation. The result may be an air outlet that is relatively difficult to adjust under some conditions, and which may not remain sealed under other conditions of use.

To address this issue, the air outlet 10 of the present disclosure may preferably include a spring 50 which may be inserted into the space between the outer periphery of the louver ring 26 and the inner periphery of the bezel 24 to act as a compression device to provide uniform and consistent efforts for operating (opening, closing and rotating the louvers) the outlet 10. That is, the placement of the spring provides a relatively constant stress on the louver ring 26 which acts as a rotating component to regulate the direction and volume of air flow. In addition, by imposing a relatively constant stress as noted the problems noted herein with regards to the size of the components when assembled and engaged to one another, are effectively reduced while simultaneously providing to the user a relatively constant resistance to any repositioning effort. Accordingly, when rotating the louver ring 26 herein, it is contemplated that the resistance to such rotation will be within +/- 25.0 % of the average resistance that is present. Resistance may be measured in units of torque (1b.-inches or Ncm). In terms of units of torque resistance, preferably, the torque resistance is in the range of 2-15 Ncm.

The spring **50** in a first configuration may preferably be a relatively straight longitudinal element comprising metal or plastic having a relatively high yield strength and resilience.

The spring **50** may include a hook feature **51** on one or both ends for handling and securing the spring into slots between the outer periphery of the louver ring **26** and the inner periphery of the bezel **24**. The spring **50** may be flexed into a stressed and curved configuration **50A** by securing the one end into slot **32** and threading the spring, using force to flex it, between the outer periphery of the louver ring **26** and the inner periphery of the bezel **24** and engaging an end in slot **34** in the bezel **24**, as shown in **FIG. 3**. When the louver ring **26** is assembled into the back side of the bezel **24**, the spring **50A** biases the louver ring **26** against the thrust rib **30 (****FIG**. **3****)** and acts much like a leaf spring by having its' ends secured and applying compression against the louver ring **26**. The thrust rib may therefore be understood as any structure that provides resistance to the biasing imposed upon it by the spring. This then may provide a force to locate the louver ring **26** within the bezel **24** which may vary according to the relative position or dimensions of the outer periphery of the louver ring **26** and the inner periphery of the bezel **24**, thus providing a relatively uniform and consistent rotational effort for operating the louvers. For instance, if one of the rings is out-of-round compared to the mating ring, the spring may act to compensate and shift the inner ring to provide a consistent fit. Stated another way, the rings of the outlet of the present disclosure may not have to be perfectly round, one to the other, to provide an acceptable range of rotational efforts.

Preferably, the spring **50** may comprise a metallic material such as a low alloy, medium carbon steel, high carbon steel or stainless steel with relatively high yield strength. This may allow the spring to return to its' original shape despite significant flexing or twisting. An example of such a spring steel is AISI 9255 (DIN and UNI: 55Si7, AFNOR 55S7). The spring steel may be hardened and tempered to about 45 Rockwell C. Preferably, the spring comprises "music wire" per ASTM A228 and has yield strength in the range of 1,38 x 10⁹ Pa - 2,76 x 10⁹ Pa (200,000-400,000 psi). Plastic materials such as acetal, PBT, liquid crystal polymer, aramid, polyetherimide and oriented polyethylene may also function as the spring **50**.

The spring **50** may have a cross-section that is uniform and circular, elliptical, flat or multi-sided (for instance from 3 to as many as 12 sides). It may have a length that is between about 10% to about 50% of the inner circumference of the bezel **24**. In one exemplary embodiment the length was about 76 mm (3 inches) and the diameter was 0,381 mm (0.015 inches) for an outlet having an effective area of about 25-32 cm² (4-5 square inches). For such an air outlet, the air flow is 68 m³/h - 136 m³/h (40-80 cfm).

It is contemplated that one or more of the yield strength, the length and the diameter or cross-section of the spring may be varied to provide different levels and ranges of rotational effort when articulating the outlet.

The spring 50, and/or the mating surfaces of the louver ring and bezel, may be coated to enhance the operation of the outlet and provide even further reductions in the rotational effort. Such coatings may comprise relatively low friction materials, such as, silicone, molybdenum disulphide and fluorinated polymers such as Teflon®. Reference to relatively low friction material may be understood as a material that reduces the coefficient of friction that would otherwise be present between the surface of the ring which ring surface engages with the spring.

**FIG. 4** illustrates the back side of the air outlet **10** in a fully assembled and closed configuration with the spring **50A** in place. Arrow **A** indicates the rotational operation of the louvers and louver ring.

The air outlet **10** of the present disclosure may find particular use within a trim component of a vehicle. A trim component may be understood as any component utilized in the interior of the vehicle, and which are visible to an occupant. Trim components may therefore include overhead systems in vehicles, such as in headliners and consoles. Trim component may also include instrument panels, door panels, wheel-well panels, flooring, trunk liners, pillar cover panels, close-out panels, etc.

While particular embodiments of the present disclosure have been illustrated and described, it would be obvious to those skilled in the art that various other changes and modifications can be made without departing from the scope of the invention. It is therefore intended to cover in the appended claims all such changes and modifications that are within the scope of the invention.

## Claims

1. An air outlet comprising:
a bezel ring (24) having an inner periphery and a thrust rib (30);
a inner ring (26) having an outer periphery, said inner ring (26) engageable within said bezel inner periphery and rotatable therein, wherein said inner ring rotates 360° relative to said bezel ring;
a spring (50) having ends and a length, said spring (50) is secured to said bezel inner periphery at said ends, said spring (50) in contact with said outer periphery of said inner ring along at least a portion of said length,
wherein said spring (50) biases said inner ring (26) against said thrust rib (30).

2. The air outlet of claim 1 wherein said inner ring (26) and said bezel ring (24) are round.

3. The air outlet of one of the preceding claims wherein said spring (50) prior to placement in said air outlet is a relatively straight longitudinal element.

4. The air outlet of one of the preceding claims wherein said spring (50) comprises a metallic material with a yield strength of greater than about 1.38 x 10⁹ Pa, in particular a low alloy, medium carbon steel, high carbon steel or stainless steel.

5. The air outlet of one of the preceding claims wherein said spring (50) comprises plastic.

6. The air outlet of one of the preceding claims wherein said inner ring (26) includes a plurality of louvers (20A-20D) including a linkage (22).

7. The air outlet of claim 6 wherein one of said plurality of louvers (20A-20D) includes a flow director.

8. The air outlet of claim 6 or 7 wherein said louvers (20A-20D), said linkage (22), said bezel ring (24) and said inner ring (26) mechanically engage one another.

9. The air outlet of one of the preceding claims wherein said spring (50) is coated with a material which reduces the coefficient of friction as between said inner ring (26) and said spring.

10. The air outlet of one of the preceding claims wherein said the length of said spring is between about 10% and 50% of the inner periphery of the bezel ring (24).

11. A trim component for the interior of a vehicle, in particular a headliner, a door panel, a pillar, a console, an instrument panel or an overhead system, wherein the air outlet according to one of the preceding claims is positioned in said trim component.

12. A method for adjusting the relative position of an inner ring (26) within a bezel ring (24), wherein said inner ring (26) rotates within said bezel ring (24), comprising:
providing said inner ring (26), said inner ring (26) including an outer periphery;
providing said bezel ring (24), said bezel ring (24) including an inner periphery;
providing a spring which at least partially conforms to said outer periphery of said inner ring (26) and to said inner periphery of said bezel ring (24);
inserting said spring between said outer periphery of said inner ring (26) and said inner periphery of said bezel ring (24) to force at least a portion of said outer periphery of said inner ring (26) against said inner periphery of said bezel ring (24), wherein said inner ring (26) rotates 360° relative to said bezel ring (24).

13. The method of claim 12 wherein said bezel ring (24) is a bezel (24) for an air outlet and said inner ring (26) includes a plurality of louvers (20A-20D) for directing and regulating air flow.

14. The method of claim 12 or 13 wherein the spring (50) has a diameter, and a length and a yield strength and one or more of said diameter, length and yield strength is varied to vary said force.

## Patentansprüche

1. Luftauslass, umfassend:
einen Blendenring (24), der einen Innenumfang und eine Schubrippe (30) aufweist;
einen Innenring (26), der einen Außenumfang aufweist, wobei der Innenring (26) innerhalb des Blendeninnenumfangs in Eingriff stehen kann und darin drehbar ist, wobei sich der Innenring 360° relativ zum Blendenring dreht;
eine Feder (50), die Enden und eine Länge aufweist, wobei die Feder (50) an den Enden an dem Blendeninnenumfang gesichert ist, wobei die Feder (50) entlang mindestens eines Abschnitts der Länge in Kontakt mit dem Außenumfang des Innenrings steht,
wobei die Feder (50) den Innenring (26) gegen die Schubrippe (30) vorspannt.

2. Luftauslass gemäß Anspruch 1, wobei der Innenring (26) und der Blendenring (24) rund sind.

3. Luftauslass gemäß einem der vorigen Ansprüche, wobei die Feder (50) vor dem Einsetzen in den Luftauslass ein relativ gerades längliches Element ist.

4. Luftauslass gemäß einem der vorigen Ansprüche, wobei die Feder (50) ein metallisches Material mit einer Fließgrenze von mehr als ca. 1,38 x 10⁹ Pa, insbesondere einen niedriglegierten Stahl mit mittlerem Kohlenstoffgehalt, Stahl mit hohem Kohlenstoffgehalt oder Edelstahl, umfasst.

5. Luftauslass gemäß einem der vorigen Ansprüche, wobei die Feder (50) Kunststoff umfasst.

6. Luftauslass gemäß einem der vorigen Ansprüche, wobei der Innenring (26) eine Vielzahl von Lamellen (20A-20D) einschließlich eines Gestänges (22) beinhaltet.

7. Luftauslass gemäß Anspruch 6, wobei eine aus der Vielzahl von Lamellen (20A-20D) einen Strömungsrichter beinhaltet.

8. Luftauslass gemäß Anspruch 6 oder 7, wobei die Lamellen (20A-20D), das Gestänge (22), der Blendenring (24) und der Innenring (26) mechanisch miteinander in Eingriff stehen.

9. Luftauslass gemäß einem der vorigen Ansprüche, wobei die Feder (50) mit einem Material beschichtet ist, das den Reibungskoeffizienten zwischen dem Innenring (26) und der Feder reduziert.

10. Luftauslass gemäß einem der vorigen Ansprüche, wobei die Länge der Feder zwischen ca. 10% und 50% des Innenumfangs des Blendenrings (24) beträgt.

11. Verkleidungskomponente für den Innenraum eines Fahrzeuges, insbesondere ein Dachhimmel, eine Türverkleidung, eine Säule, eine Konsole, ein Armaturenbrett oder ein Überkopfsystem, wobei der Luftauslass gemäß einem der vorigen Ansprüche in der Verkleidungskomponente positioniert ist.

12. Verfahren zum Anpassen der relativen Position eines Innenrings (26) innerhalb eines Blendenrings (24), wobei sich der Innenring (26) innerhalb des Blendenrings (24) dreht, umfassend:
Bereitstellen des Innenrings (26), wobei der Innenring (26) einen Außenumfang beinhaltet; Bereitstellen des Blendenrings (24), wobei der Blendenring (24) einen Innenumfang beinhaltet;
Bereitstellen einer Feder, die mindestens teilweise dem Außenumfang des Innenrings (26) und dem Innenumfang des Blendenrings (24) entspricht;
Einsetzen der Feder zwischen dem Außenumfang des Innenrings (26) und dem Innenumfang des Blendenrings (24), um mindestens einen Abschnitt des Außenumfangs des Innenrings (26) gegen den Innenumfang des Blendenrings (24) zu drücken, wobei sich der Innenring (26) 360° relativ zu dem Blendenring (24) dreht.

13. Verfahren gemäß Anspruch 12, wobei der Blendenring (24) eine Blende (24) für einen Luftauslass ist und der Innenring (26) eine Vielzahl von Lamellen (20A-20D) zum Richten und Regulieren von Luftströmung beinhaltet.

14. Verfahren gemäß Anspruch 12 oder 13, wobei die Feder (50) einen Durchmesser und eine Länge und eine Fließgrenze aufweist und eines oder mehr von Durchmesser, Länge und Fließgrenze variiert werden, um die Kraft zu variieren.

## Revendications

1. Sortie d'air comprenant :
un anneau d'encadrement (24) ayant une périphérie interne et une nervure de butée (30) ;
un anneau interne (26) ayant une périphérie externe, ledit anneau interne (26) pouvant se mettre en prise à l'intérieur de ladite périphérie interne d'encadrement et pouvant tourner à l'intérieur de cette dernière, dans laquelle ledit anneau interne tourne à 360° par rapport audit anneau d'encadrement ;
un ressort (50) ayant des extrémités et une longueur, ledit ressort (50) est fixé à ladite périphérie interne d'encadrement au niveau desdites extrémités, ledit ressort (50) étant en contact avec ladite périphérie externe dudit anneau interne le long d'au moins une partie de ladite longueur,
dans laquelle ledit ressort (50) sollicite ledit anneau interne (26) contre ladite nervure de butée (30).

2. Sortie d'air selon la revendication 1, dans laquelle ledit anneau interne (26) et ledit anneau d'encadrement (24) sont ronds.

3. Sortie d'air selon l'une des revendications précédentes, dans laquelle ledit ressort (50) avant la mise en place dans ladite sortie d'air, est un élément longitudinal relativement droit.

4. Sortie d'air selon l'une des revendications précédentes, dans laquelle ledit ressort (50) comprend un matériau métallique avec une limite d'élasticité supérieure à environ 1,38 x 10⁹ Pa, en particulier un acier à moyenne teneur en carbone faiblement allié, un acier à forte teneur en carbone ou un acier inoxydable.

5. Sortie d'air selon l'une des revendications précédentes, dans laquelle ledit ressort (50) comprend du plastique.

6. Sortie d'air selon l'une des revendications précédentes, dans laquelle ledit anneau interne (26) comprend une pluralité de volets (20A - 20D) comprenant une tringlerie (22).

7. Sortie d'air selon la revendication 6, dans laquelle l'un de ladite pluralité de volets (20A - 20D) comprend un élément directeur d'écoulement.

8. Sortie d'air selon la revendication 6 ou 7, dans laquelle lesdits volets (20A - 20D), ladite tringlerie (22), ledit anneau d'encadrement (24) et ledit anneau interne (26) se mettent en prise mécaniquement entre eux.

9. Sortie d'air selon l'une des revendications précédentes, dans laquelle ledit ressort (50) est recouvert avec un matériau qui réduit le coefficient de friction entre ledit anneau interne (26) et ledit ressort.

10. Sortie d'air selon l'une des revendications précédentes, dans laquelle ladite longueur dudit ressort est comprise entre environ 10% et 50% de la périphérie interne de l'anneau d'encadrement (24).

11. Composant de garniture pour l'intérieur d'un véhicule, en particulier, une garniture de toit, un panneau de porte, un pilier, une console, un tableau de bord ou un système en plafond, dans lequel la sortie d'air selon l'une des revendications précédentes, est positionnée dans ledit composant de garniture.

12. Procédé pour ajuster la position relative d'un anneau interne (26) dans un anneau d'encadrement (24), dans lequel ledit anneau interne (26) tourne à l'intérieur dudit anneau d'encadrement (24), comprenant les étapes consistant à :
prévoir ledit anneau interne (26), ledit anneau interne (26) comprenant une périphérie externe ;
prévoir ledit anneau d'encadrement (24), ledit anneau d'encadrement (24) comprenant une périphérie interne ;
prévoir un ressort qui se conforme au moins partiellement à ladite périphérie externe dudit anneau interne (26) et à ladite périphérie interne dudit anneau d'encadrement (24) ;
insérer ledit ressort entre ladite périphérie externe dudit anneau interne (26) et ladite périphérie interne dudit anneau d'encadrement (24) pour forcer au moins une partie de ladite périphérie externe dudit anneau interne (26) contre ladite périphérie interne dudit anneau d'encadrement (24), dans lequel ledit anneau interne (26) tourne à 360° par rapport audit anneau d'encadrement (24).

13. Procédé selon la revendication 12, dans lequel ledit anneau d'encadrement (24) est un encadrement (24) pour une sortie d'air et ledit anneau interne (26) comprend une pluralité de volets (20A - 20D) pour diriger et réguler l'écoulement d'air.

14. Procédé selon la revendication 12 ou 13, dans lequel le ressort (50) a un diamètre, et une longueur et une limite d'élasticité et un ou plusieurs parmi ledit diamètre, ladite longueur et ladite limité d'élasticité est (sont) modifié(e)s pour modifier ladite force.
